# EUROPÄISCHE PATENTSCHRIFT

(11) **EP 3 519 254 B1**
(45) Veröffentlichungstag und Bekanntmachung des Hinweises auf die Patenterteilung: **05.05.2021**
(21) Anmeldenummer: 17749144.6
(22) Anmeldetag: 20.07.2017
(51) Int. Cl.: B60R 25/24, G01S 5/02

(54) **VORRICHTUNG ZUR POSITIONSBESTIMMUNG EINER MOBILEN ZUGANGSEINRICHTUNG AM FAHRZEUG**
APPARATUS FOR DETERMINING THE POSITION OF A MOBILE ACCESS DEVICE ON THE VEHICLE
PROCÉDÉ DE DÉTERMINATION DE LA POSITION D'UN DISPOSITIF D'ACCÈS MOBILE SUR UN VÉHICULE

(30) Priorität: 30.09.2016 DE 102016118641
(43) Veröffentlichungstag der Anmeldung: 07.08.2019
(73) Patentinhaber: Huf Hülsbeck & Fürst GmbH & Co. KG, 42551 Velbert (DE)
(72) Erfinder: BREER, Jan, 45259 Essen (DE); NEUHOFF, Stefan, 45239 Essen (DE)
(74) Vertreter: Zenz Patentanwälte Partnerschaft mbB
(86) Internationale Anmeldenummer: PCT/EP2017/068395
(87) Internationale Veröffentlichungsnummer: WO 2018/059781

(56) Entgegenhaltungen:
- EP-A1- 0 491 095
- EP-A1- 1 193 131
- WO-A1-2014/159873
- WO-A1-2016/110676
- DE-A1-102013 221 936
- DE-A1-102014 102 328

## Beschreibung

Die Erfindung betrifft eine Vorrichtung zur Positionsbestimmung einer mobilen Zugangseinrichtung gegenüber einem Kraftfahrzeug.

An Fahrzeugen werden häufig elektronische Zugangsmittel verwendet, um eine Schließfunktion oder Startfunktion am Fahrzeug auszulösen. Dazu sind Funkfernbedienungen für Fahrzeuge bekannt, außerdem sogenannte Keyless-Entry-Systeme und Keyless-Go-Systeme, welche eine aktive Betätigung der Fernbedienungsmittel überflüssig machen.

Zunehmend werden außerdem multifunktionale Geräte mit drahtlosen Kommunikationsfähigkeiten für den Zweck der Legitimationsprüfung gegenüber einem Kraftfahrzeug verwendet. Die Zugangseinrichtung ist in diesem Fall ein mobiles Kommunikationsgerät in Gestalt eines Mobiltelefons oder mobiler Computer, welcher die Funktionen eines Fahrzeugschlüssels übernimmt, so dass der Benutzer neben seinem mobilen Kommunikationsgerät keine weitere Zugangseinrichtung mitzunehmen braucht. Die Zugangseinrichtung ist mit entsprechenden Daten und Schnittstellen ausgestattet, die eine Kommunikation mit Fahrzeugsystemen erlauben, um Berechtigungsdaten an das Fahrzeug zu übertragen.

Diese mobilen Zugangseinrichtungen sind jedoch zu den etablierten Systemen der Kraftfahrzeuge für die Zugangskontrolle nicht kompatibel. Herkömmliche Systeme an Kraftfahrzeugen verwenden häufig niederfrequente Signale, insbesondere um die Position einer Zugangseinrichtung gegenüber dem Fahrzeug festzustellen und diese Position in eine Plausibilitätsprüfung einzubeziehen.

Moderne Mobiltelefone, Smartphones und tragbare Computer weisen jedoch standardisierte Schnittstellen zur hochfrequenten Kommunikation auf, die mit diesen Systemen auf Fahrzeugseite zur Lagebestimmung nicht kompatibel sind.

Das Dokument WO 2016/110676 A1 offenbart eine Vorrichtung zur Transparenzsteuerung einer Windschutzscheibe eines Fahrzeuges zur Diebstahlverhinderung, wobei eine Mehrzahl von Funkeinrichtungen zur Prüfung der Authentizität eines Fahrzeugschlüssels im Fahrzeug angeordnet sind.

Aus der EP 0 491 095 A1 ist eine Kommunikationsstruktur für ein Fahrzeug bekannt, wobei Signalwege zwischen Signalstationen durch optische, mehrfach reflektierte Signale dargestellt werden, so dass nur eine drahtgebundene Stromversorgung für alle Komponenten bereitzustellen ist.

Aufgabe der Erfindung ist es, eine einfache und nachrüstbare Lösung für Fahrzeuge anzubieten, die eine verlässliche Positionsbestimmung einer mobilen Zugangseinrichtung gegenüber einem Fahrzeug erlaubt, um die Zugriffsberechtigungen auf das Fahrzeug sicherer zu gestalten.

Die Aufgabe wird gelöst durch eine Vorrichtung mit den Merkmalen des Patentanspruches 1.

Gemäß der Erfindung wird eine Vorrichtung zur Positionsbestimmung einer mobilen Zugangseinrichtung gegenüber einem Kraftfahrzeug vorgeschlagen, wobei die mobile Zugangseinrichtung eine Kommunikationseinrichtung für eine drahtlose Kurzdistanzkommunikation aufweist.

Die mobile Zugangseinrichtung kann ein handelsübliches Kommunikationsgerät sein, zum Beispiel ein Mobiltelefon oder ein tragbarer Computer. Diese Systeme enthalten standardmäßig eine oder mehrere Kommunikationseinrichtungen zur Etablierung von drahtlosen Kurzdistanzkommunikationen. Unter Kurzdistanzkommunikation ist im Rahmen dieser Anmeldung eine Funktechnik zu verstehen, welche einen räumlich begrenzten Datenaustausch innerhalb von einigen Metern, beispielsweise bis zu 20 Metern erlaubt.

Das Fahrzeug weist eine Steuereinrichtung auf, welche zur Sperrung und Freigabe des Zugriffs auf eine Fahrzeugfunktion ausgebildet ist. Bei der Funktion kann es sich um die Freigabe oder Sperrung von Türöffnungen oder Klappenöffnungen handeln, jedoch auch um den Start eines Motors des Fahrzeuges oder eine sonstige Bedienfunktion, die von innerhalb des Fahrgastraumes ausgelöst wird.

Gemäß der Erfindung werden mehrere separate Module vorgesehen, die jeweils in einem Gehäuse ausgebildet sind. Jedes der Module enthält in seinem jeweiligen Gehäuse eine Kommunikationseinrichtung für die genannte drahtlose Kurzdistanzkommunikation. Außerdem ist in jedem der Module ein eigenständiger, autonomer Energiespeicher vorgesehen, beispielsweise eine Batterie. Die Gehäuse jedes Moduls umfassen damit sowohl die Kommunikationseinrichtung für die drahtlose Kurzdistanzkommunikation als auch den zugehörigen Energiespeicher.

Jedes der Module weist außerdem Befestigungsmittel auf, welche die Befestigung der Module im Innenraum eines Fahrzeuges erlauben. Dafür können beispielsweise die Gehäuse Rastmittel aufweisen, um die Gehäuse der Module an geeigneten Stellen in den Raum des Kraftfahrzeuges ortsfest zu platzieren, wobei die Rastmittel mit fahrzeugseitigen Gegenstücken wechselwirken. Alternativ sind andere Befestigungsmittel möglich, beispielsweise Klebstoffe oder Magnete.

Wenigstens eines der Module ist zur Datenübertragung mit der Steuereinrichtung gekoppelt. Zwischen dem wenigstens einen Modul und der Steuereinrichtung des Kraftfahrzeuges ist eine Datenverbindung etablierbar, über welche eine Datenübermittlung zumindest von diesem Modul zu der Steuereinrichtung möglich ist. Die übrigen Module können ebenfalls unmittelbar mit der Steuereinrichtung gekoppelt werden, um Daten zu dieser zu übertragen, es kann jedoch auch vorgesehen sein, dass die Module untereinander in Kommunikationsverbindung stehen und nur das eine genannte Modul mit der Steuereinrichtung gekoppelt ist. Die Kopplung kann über die Kommunikationseinrichtung zur Kurzdistanzkommunikation erfolgen, welche in dem Modul ausgebildet ist, oder über einen anderen Kopplungsweg.

Die Module sind ausgebildet, um jeweils eine Signalstärke einer Signalübertragung zwischen der Zugangseinrichtung und dem jeweiligen Modul zu erfassen. Außerdem sind die Module und die Steuereinrichtung des Fahrzeuges derart ausgebildet, dass eine Positionsbestimmung der Zugangseinrichtung in Abhängigkeit von mehreren erfassten Signalstärken verschiedener Module ausgeführt wird. In Abhängigkeit von dieser Signalstärkebestimmung erfolgt die Freigabe oder die Sperrung eines Zugriffs auf die Fahrzeugfunktionen.

Die Module werden erfindungsgemäß an unterschiedlichen Positionen am Kraftfahrzeug, insbesondere im Fahrgastraum des Kraftfahrzeuges angeordnet. Je nach Position und Lage der Zugangseinrichtung erfolgt ein Datenaustausch zwischen der Kommunikationseinrichtung und einem Modul mit einer Signalstärke, die abhängig von der Distanz und den in der Funkstrecke angeordneten Hindernissen ist. Durch ein Einmessen des Systems kann erreicht werden, dass Signalstärkeprofile der Mehrzahl von Modulen in der Steuereinrichtung oder auch einem der Module ausgewertet werden, um die Position der Zugangseinrichtung innerhalb des Fahrgastraumes oder auch außerhalb des Fahrgastraumes zu bestimmen.

Die mobile Zugangseinrichtung tritt in einen Signalaustausch über die Kurzdistanzkommunikation mit mehreren der Modulen. In mehreren dieser Module wird die zugehörige Signalstärke der Kommunikation ermittelt. Durch Vergleich der Signalstärken kann die Position der mobilen Zugangseinrichtung in Näherung bestimmt werden. Die Positions- und Distanzbestimmung über hochfrequente Funktechniken ist zwar grundsätzlich problematischer als die Verwendung von niederfrequenten Funkwellen zur Positionsermittlung, durch die flexible Anordnung der Module des erfindungsgemäßen Systems im Fahrzeugraum ist jedoch eine verlässliche Erkennung, insbesondere Innen-Außenerkennung der Lage der Zugangseinrichtung möglich.

Die flexible Anordnungsmöglichkeit jedes Moduls, welches einen eigenen Energiespeicher und Befestigungsmittel aufweist, ermöglicht die optimale Platzierung der Module im Innenraum des Fahrzeuges und eine Nachrüstung entsprechender Fahrzeuge. Die Module weisen untereinander keine drahtgebundenen Vernetzungsmittel auf, sondern sind autark energieversorgt und an beliebiger Stelle im Fahrzeugraum zu platzieren. Die entsprechenden Systeme mit den Modulen sind daher äußerst rasch und mit geringem Kostenaufwand einzusetzen. Dies ist gegenüber drahtgebundenen Systemen ein erheblicher Vorteil, da es keine Leitungen in dem Innenraum des Fahrzeuges zu verlegen und hinter Verkleidungen einzubringen gibt.

In einer bevorzugten Ausführungsform der Erfindung sind die Module mit ihren Kommunikationseinrichtungen und die Zugangseinrichtungen mit ihrer Kommunikationseinrichtung für eine Kommunikation gemäß einem Bluetooth Low Energy (BLE) Standard ausgebildet. Der BLE-Standard ist ein Teil der etablierten Bluetooth-Spezifikation. Grundsätzlich gibt es Kommunikationseinrichtungen, welche ausschließlich den BLE-Standard unterstützen, andere Geräte stützen den BLE-Standard sowie den herkömmlichen Bluetooth Standard.

Aus Gründen der Energieeffizienz unterstützen die Module gemäß der bevorzugten Ausführungsform ausschließlich den BLE-Standard, um eine dauerhafte und langfristige Funktion des Systems mit den autonomen Satelliten mit eigener Energieversorgung über mehrere Jahre sicherzustellen.

Gemäß einer bevorzugten Ausbildung der Erfindung sind die Module des erfindungsgemäßen Systems derart ausgebildet, dass jedes der Module mit wenigstens einem anderen der Module in eine drahtlose Kurzdistanzkommunikation eintritt und Daten zu einer Signalstärke einer Signalübertragung zwischen der Zugangseinrichtung und dem jeweiligen Modul an das andere Modul überträgt.

Gemäß dieser Ausführungsform wird eine Art Netz zwischen den Modulen des Systems gebildet, wobei sowohl ein Sternnetz als auch ein Ringnetz oder eine sonstige Netzkonfiguration über die Kurzdistanzkommunikationen zwischen den einzelnen Modulen etablierbar ist. Da jedes der Module eine Signalstärke zwischen dem Modul und der Zugangseinrichtung erfasst, können die zu dem Modul erfassten Daten an ein anderes Modul übertragen werden, wo sie ausgewertet oder weitergereicht werden können. Beispielsweise kann vorgesehen sein, dass nur eines der Module die Daten auswertet oder die Daten von allen Modulen über das aufgespannte Netz zwischen den autonomen Modulen an die Steuereinrichtung des Fahrzeugsystems weitergereicht werden. Diese Weitergabe der Informationen findet mit einer zugehörigen Identifikationskennung des Moduls statt, welches die jeweiligen Daten erfasst hat, so dass eine Zuordnung des erfassenden Moduls zu den Signaldaten möglich ist und in Kenntnis der Lage des identifizierten Moduls die Positionsbestimmung der Zugangseinrichtung durchgeführt werden kann.

Bei Anwendung der Erfindung wird es nach Platzierung der Module im Fahrzeugraum ggf. erforderlich sein, das System hinsichtlich der Lage der einzelnen Module und der Signalstärken einzulernen, sofern diese nicht an vorgegebenen und systemseitig gespeicherten Positionen platziert werden. Dabei ist es möglich, dass sich die Module durch Aufspannen eines entsprechenden Kommunikationsnetzes zwischen den Modulen eigenständig einmessen, um die Distanz zwischen den einzelnen Modulen zu ermitteln. Dieser Einmessvorgang zwischen den einzelnen Modulen des Systems kann einmalig oder wiederholt erfolgen, z.B. in größeren Zeitabständen bei dem Wunsch nach einer erneuten Kalibrierung wiederholt werden.

Das Einmessprinzip kann dabei so gestaltet sein, dass jedes der Module mit jedem anderen Modul kurzzeitig Daten austauscht und die Signalstärken einseitig oder beidseitig erfasst werden. Mit den Signalstärken, die repräsentativ für die Signalstrecke und Entfernung der Module voneinander sind, kann dann die Lage der Module zueinander durch Trilateration bestimmt werden. Im Betrieb der Vorrichtung können diese Entfernungsinformationen der Module zueinander bei der Bestimmung der Position der Zugangseinrichtung gegenüber den Modulen berücksichtigt werden.

In einer bevorzugten Gestaltung der Erfindung ist eines der Module als Hauptmodul derart ausgebildet, dass es für eine Kurzdistanzkommunikation mit sämtlichen anderen Modulen ausgebildet ist, wobei das Hauptmodul von den übrigen Modulen Informationen zu den dort jeweils erfassten Signalstärken empfängt und diese Information oder daraus abgeleitete Informationen an die Steuereinrichtung übermittelt.

Wie oben beschrieben, kann das zwischen den Modulen aufgespannte Netz grundsätzlich dafür sorgen, dass Distanzinformationen über das Netz weitergereicht werden. Die Auswertung dieser Informationen kann dann in einem einzelnen Modul stattfinden oder die Informationen werden als Rohdaten an die Steuereinrichtung im Fahrzeug übermittelt, wo eine Auswertung und Positionsbestimmung erfolgt.

Gemäß der genannten Ausführungsform ist jedoch eines der Module zur Kurzdistanzkommunikation mit sämtlichen anderen Modulen ausgebildet, so dass bezüglich dieses Moduls eine Sternverbindung zu allen anderen Modulen besteht. Dieses Modul erhält die Distanzinformationen und Signalstärkeinformationen von allen anderen Modulen und leitet diese, aufbereitet oder als Rohdaten, an die Steuereinrichtung weiter.

Gegebenenfalls kann dieses Hauptmodul mit einer besonders leistungsfähigen Energiequelle versorgt sein oder es kann, im Gegensatz zu den weiteren Modulen, an ein Fahrzeugnetz zur Spannungsversorgung angeschlossen sein.

In einer bevorzugten Weiterbildung der voranstehend genannten Ausführungsform ist das Hauptmodul über eine Datenleitung mit der Steuereinrichtung gekoppelt. Die Datenleitung kann zusammen mit Versorgungsleitungen ausgeführt sein, um das Modul sowohl spannungsversorgt zu halten als auch die Daten von dem Modul, welche dieses von allen anderen Modulen empfangen hat, weiterzuleiten.

In einer bevorzugten Ausführungsform der Erfindung sind die Befestigungsmittel der Module als Klebepads ausgebildet.

Eine derartige Gestaltung ermöglicht eine besonders flexible Anordnung der Module im Fahrzeug, insbesondere im Fahrgastraum. Die Klebepads erlauben die Anordnung der Module beispielsweise im Bereich von Innenverkleidungen, Scheiben oder in Ablagen.

Während die Erfindung grundsätzlich mit verschiedenen Arten von Zugangseinrichtungen einsetzbar ist, die über die Fähigkeit zur Kurzdistanzkommunikation verfügen, ist es bevorzugt, dass die Zugangseinrichtung als Smartphone ausgebildet ist.

Smartphones verfügen regelmäßig bereits über verschiedene Kommunikationseinrichtungen für drahtlose Kurzdistanzkommunikationen, beispielsweise Schnittstellen zur Kommunikation über Bluetooth oder Bluetooth Low Energy.

Die Erfindung wird anhand der beiliegenden Zeichnungen näher erläutert.
Figur 1 zeigt schematisch die Platzierung der erfindungsgemäßen Vorrichtung in einem Fahrzeug;
Figur 2 zeigt schematisch die erfindungswesentlichen Komponenten eines Moduls.

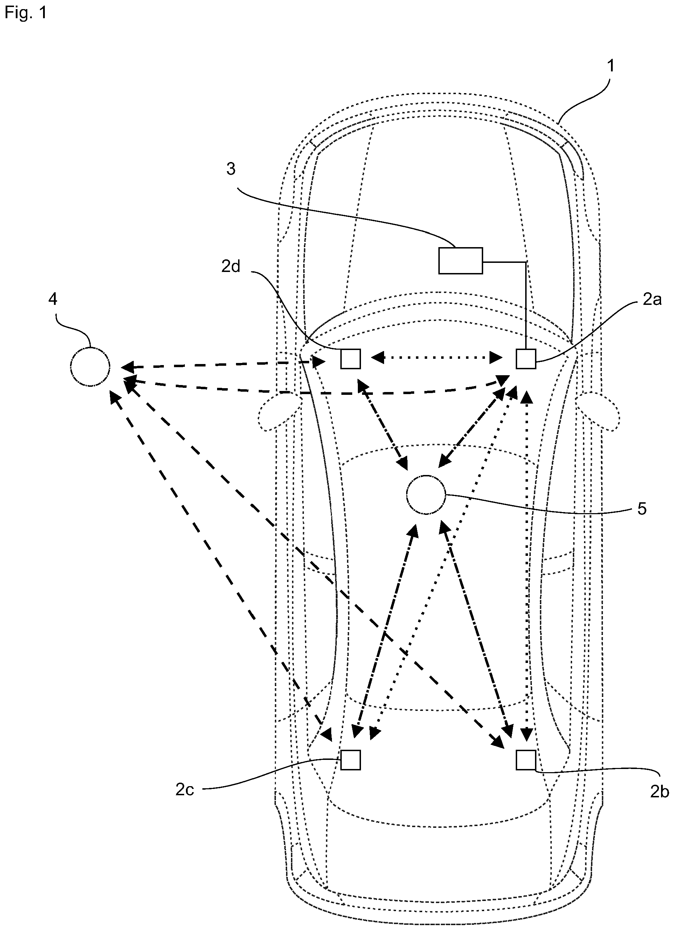

In Figur 1 ist schematisch ein Fahrzeug 1 dargestellt. In dem Fahrzeug sind an unterschiedlichen Positionen des inneren Fahrgastraumes Module 2a, 2b, 2c und 2d angeordnet. Die Module 2a und 2d befinden sich im Bereich der Windschutzscheibe und des vorderen Armaturenbretts und sind dort mit an den Modulen angeordneten Klebepads fixiert. Die Module 2b und 2c sind im heckseitigen Fahrgastraum, im Bereich der C-Säule ebenfalls mit Klebepads im Innenraum fixiert.

Sämtliche der Module 2a, 2b, 2c und 2d verfügen über Kommunikationseinrichtungen gemäß dem Bluetooth Low Energy (BLE) Standard. Die Module 2b, 2c und 2d sind mit Energiespeichern in Gestalt von Batterien ausgestattet, die im Inneren der Gehäusemodule aufgenommen sind. Das Modul 2a ist über eine Leitungsverbindung mit einer Steuereinrichtung 3 im Fahrzeug gekoppelt. Das Modul 2a wird über die Kabelanbindung mittels Kopplung mit dem Versorgungsnetz des Fahrzeuges außerdem mit Energie versorgt.

Das Modul 2a dient in diesem Ausführungsbeispiel als Hauptmodul, welches Signale von den übrigen Modulen 2b, 2c und 2d empfängt, die gemäß dem BLE-Standard übertragen werden.

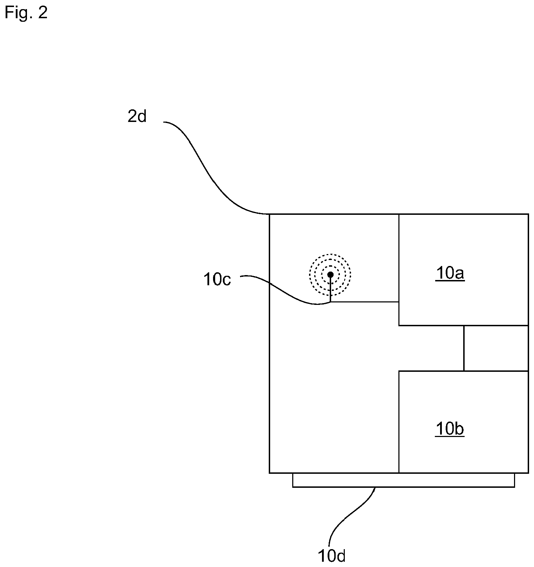

In Figur 2 ist das Modul 2d stellvertretend für die Module 2b, 2c, 2d dargestellt. Das Modul 2d weist eine Kommunikationseinrichtung 10a gemäß dem BLE-Standard auf, welche mit einer Batterie 10b gekoppelt ist. Eine Antenne 10c zur Übertragung der BLE-Signale ist mit der

Kommunikationseinrichtung 10a verbunden. Ein Klebepad 10d mit beidseitiger Klebebeschichtung ist an dem Modul 2d als Befestigungsmittel angeklebt, und kann zur Befestigung des Moduls 2d im Fahrgastraum verwendet werden.

Eine mobile Zugangseinrichtung 4 ist außerhalb des Fahrgastraumes des Fahrzeuges 1 angeordnet. Die mobile Zugangseinrichtung ist in diesem Beispiel ein Smartphone, welches als Fahrzeugschlüssel für das Fahrzeug konfiguriert ist. Die mobile Zugangseinrichtung weist eine Kommunikationseinrichtung für einen drahtlosen Datenaustausch gemäß dem BLE-Standard auf. Die mobile Zugangseinrichtung 4 koppelt dazu mit einer entsprechenden Sendeempfangseinheit am Fahrzeug (nicht dargestellt). Um den Zugang zum Fahrzeug sicherer zu gestalten, wird die Position der mobilen Zugangseinrichtung 4 gegenüber dem Fahrzeug bestimmt, in dem die mobile Zugangseinrichtung 4 Signale aussendet, deren Signalstärke in den Modulen 2a, 2b, 2c und 2d erfasst werden. Dazu kann die mobile Zugangseinrichtung nacheinander mit mehreren der Module 2a...2d in Datenaustausch treten.

Jedes der Module, welches in eine BLE-Verbindung mit der mobilen Zugangseinrichtung tritt, erfasst die Signalstärke der empfangenen Signale.

Die erfassten Signalstärken der BLE-Verbindung zwischen der mobilen Zugangseinrichtung 4 und den jeweiligen Modulen werden an das Hauptmodul 2a von den übrigen Modulen 2b, 2c und 2d übermittelt. Das Modul 2a leitet die ermittelten Signalstärken an die Steuereinrichtung 3 weiter. Dort wird ermittelt, ob die ermittelten Signalstärken eine Positionsbestimmung zulassen und für die angeforderte Fahrzeugfunktion eine legitime Position anzeigen.

Möchte beispielsweise ein Träger der mobilen Kommunikationseinrichtung 4 die Fahrgasttür öffnen, ist die Positionsbestimmung außerhalb des Fahrzeuges erforderlich. Befindet sich hingegen eine mobile Zugangseinrichtung 5 im Innenraum des Fahrzeuges, so zeigen die an den Modulen 2a, 2b, 2c und 2d empfangenen Signalstärken von der mobilen Zugangseinrichtung erheblich größere Signalstärken beim BLE-Signalaustausch.

Zur Auswertung der Position über die Signalstärken kann eine herkömmliche Trilateration verwendet werden oder es wird ein Wertevergleich mit vorgegebenen zulässigen Signalstärkeintervallen zu zugeordneten Positionen verglichen. Dazu ist entweder im Hauptmodul 2a oder der Steuereinrichtung 3 die Position der Module 2a, 2b, 2c und 2d zu ermitteln und zu speichern. Dies kann in einem anfänglichen Einmessvorgang geschehen, der nach der Platzierung und Fixierung der Module im Innenraum des Fahrzeuges gestartet wird. Dazu kann beispielsweise das Hauptmodul 2a an einer vorgegebenen Position im Fahrgastraum platziert werden und es kann eine Signalstärkeerfassung für den Datenaustausch zwischen den Modulen erfolgen. Daraufhin erhält das Hauptmodul 2a Informationen über die Distanz der übrigen Module zum Hauptmodul. Weiterhin können die Module untereinander in Datenaustausch treten, beispielsweise also das Modul 2b mit dem Modul 2c und das Modul 2c mit dem Modul 2d oder auch zwei 2d mit 2b. Diese Signalstärken können, zusammen mit den jeweiligen Identifikationsdaten der Module, welche die Signalstärken ermitteln und der Module, welche die Signale ausgesandt haben, in dem Hauptmodul 2a oder der Steuereinrichtung 3 genutzt werden, um eine Lagebestimmung der Module zueinander zu berechnen. Dieser Einmessvorgang kann einmalig geschehen oder mehrfach wiederholt werden. Durch die flexible und autonome Energieversorgung der Module ist eine Nachrüstung im Fahrzeug problemlos möglich und auch die Platzierung in den Fahrzeugen kann in bestmöglicher Weise erfolgen. Entsprechend führt die modulare und autarke Ausbildung von den Modulen zu einer verbesserten Sicherheit bei der Positionsüberprüfung von mobilen Zugangseinrichtungen.

## Patentansprüche

1. Vorrichtung zur Positionsbestimmung einer mobilen Zugangseinrichtung gegenüber einem Kraftfahrzeug (1),
wobei die mobile Zugangseinrichtung (4; 5) eine Kommunikationseinrichtung für eine drahtlose Kurzdistanzkommunikation aufweist,
wobei die Vorrichtung aufweist:
eine Steuereinrichtung (3) im Fahrzeug (1), welche zur Sperrung und Freigabe des Zugriffs auf eine Fahrzeugfunktion ausgebildet ist,
eine Mehrzahl von separaten Modulen (2a, 2b, 2c, 2d), die jeweils in einem Gehäuse eine Kommunikationseinrichtung für die drahtlose Kurzdistanzkommunikation aufweisen,
wobei in einer Mehrzahl der Module die zugehörige Kommunikationseinrichtung mit einem zugehörigen Energiespeicher gekoppelt ist, welcher in dem Gehäuse des jeweiligen Moduls (2b, 2c, 2d) aufgenommen ist,
wobei die Module Befestigungsmittel aufweisen, welche die Befestigung der Module (2a, 2b, 2c, 2d) im Innenraum eines Fahrzeugs erlauben,
wobei wenigstens eines der Module (2a, 2b, 2c, 2d) zur Datenübertragung mit der Steuereinrichtung (3) gekoppelt ist,
wobei die Module (2a, 2b, 2c, 2d) ausgebildet sind, um jeweils eine Signalstärke einer Signalübertragung zwischen der Zugangseinrichtung (4; 5) und dem jeweiligen Modul zu erfassen,
wobei die Module (2a, 2b, 2c, 2d) und die Steuereinrichtung (3) ausgebildet sind, eine Positionsbestimmung der Zugangseinrichtung in Abhängigkeit von mehreren erfassten Signalstärken verschiedener Module auszuführen und den Zugriff auf die Fahrzeugfunktion in Abhängigkeit von der bestimmen Position freizugeben oder zu sperren.

2. Vorrichtung nach Anspruch 1, wobei die Kommunikationseinrichtungen der Module und der Zugangseinrichtung für eine Kommunikation gemäß einem Bluetooth-Low-Energy Standard ausgebildet sind.

3. Vorrichtung nach Anspruch 1 oder 2, wobei die Module derart ausgebildet sind, dass jedes der Module mit wenigstens einem anderen der Module in eine drahtlose Kurzdistanzkommunikation eintritt und Daten zu einer Signalstärke einer Signalübertragung zwischen der Zugangseinrichtung und dem jeweiligen Modul an das andere Modul überträgt.

4. Vorrichtung nach Anspruch 3, wobei das mit der Steuereinrichtung gekoppelte Modul als Hauptmodul derart ausgebildet ist, dass es für eine Kurzdistanzkommunikation mit sämtlichen anderen Modulen ausgebildet ist, wobei das Hauptmodul von den übrigen Modulen Informationen zu den dort jeweils erfassten Signalstärken empfängt und diese Informationen oder daraus abgeleitete Informationen an die Steuereinrichtung übermittelt.

5. Vorrichtung nach Anspruch 4, wobei das Hauptmodul über eine Datenleitung mit der Steuereinrichtung gekoppelt ist.

6. Vorrichtung nach einem der vorangehenden Ansprüche, wobei die Befestigungsmittel als Klebepads ausgebildet sind.

7. Vorrichtung nach einem der vorangehenden Ansprüche, wobei die Zugangseinrichtung als Smartphone ausgebildet ist.

## Claims

1. Apparatus for determining the position of a mobile access device relative to a motor vehicle (1),
wherein the mobile access device (4; 5) comprises a communication device for short-distance wireless communication,
wherein the apparatus comprises:
a control device (3) in the vehicle (1), which is designed to block and unblock access to a vehicle function,
a plurality of separate modules (2a, 2b, 2c, 2d) each having, in a housing, communication means for the short-distance wireless communication,
wherein in a plurality of the modules the associated communication device is coupled to an associated energy storage device housed in the housing of the respective module (2b, 2c, 2d),
wherein the modules comprise fastening means allowing the modules (2a, 2b, 2c, 2d) to be fastened in the interior of a vehicle,
at least one of the modules (2a, 2b, 2c, 2d) being coupled to the control device (3) for data transmission,
wherein the modules (2a, 2b, 2c, 2d) are each designed to detect a signal strength of a signal transmission between the access device (4; 5) and the respective module,
wherein the modules (2a, 2b, 2c, 2d) and the control device (3) are designed to perform a position determination of the access device in dependence on a plurality of detected signal strengths of different modules and to enable or disable access to the vehicle function in dependence on the determined position.

2. Apparatus according to claim 1, wherein the communication devices of the modules and the access device are adapted for communication according to a Bluetooth low energy standard.

3. Apparatus according to claim 1 or 2, wherein said modules are adapted such that each of said modules enters into short-distance wireless communication with at least one other of said modules and transmits data on a signal strength of a signal transmission between said access device and said respective module to said other module.

4. Apparatus according to claim 3, wherein said module coupled to said control means is configured as a main module such that it is configured for short distance communication with all other modules, said main module receiving from said other modules information on signal strengths respectively detected thereat and transmitting said information or information derived therefrom to said control means.

5. Apparatus according to claim 4, wherein the main module is coupled to the control device via a data line.

6. Apparatus according to any one of the preceding claims, wherein the attachment means are formed as adhesive pads.

7. Apparatus according to any one of the preceding claims, wherein the access device is designed as a smartphone.

## Revendications

1. Dispositif pour déterminer la position d'un dispositif d'accès mobile par rapport à un véhicule à moteur (1),
dans lequel le dispositif d'accès mobile (4 ; 5) comprend des moyens de communication pour une communication sans fil à courte distance,
le dispositif comprenant :
un dispositif de commande (3) dans le véhicule (1) qui est conçu pour bloquer et libérer l'accès à une fonction du véhicule,
une pluralité de modules séparés (2a, 2b, 2c, 2d) ayant chacun dans un boîtier un dispositif de communication pour une communication sans fil à courte distance,
dans lequel, dans une pluralité des modules, le dispositif de communication associé est couplé à un dispositif de stockage d'énergie associé logé dans le boîtier du module respectif (2b, 2c, 2d),
les modules comprenant des moyens de fixation permettant de fixer les modules (2a, 2b, 2c, 2d) à l'intérieur d'un véhicule,
dans lequel au moins un des modules (2a, 2b, 2c, 2d) est couplé au dispositif de commande (3) pour la transmission de données,
dans lequel les modules (2a, 2b, 2c, 2d) sont chacun adaptés pour détecter une intensité de signal d'une transmission de signal entre le dispositif d'accès (4 ; 5) et le module respectif,
les modules (2a, 2b, 2c, 2d) et le dispositif de commande (3) étant conçus pour effectuer une détermination de position du dispositif d'accès en fonction d'une pluralité d'intensités de signal détectées de différents modules et pour activer ou désactiver l'accès à la fonction véhicule en fonction de la position déterminée.

2. Dispositif de la revendication 1, dans lequel les dispositifs de communication des modules et du dispositif d'accès sont adaptés pour communiquer selon une norme de basse consommation Bluetooth.

3. Dispositif selon la revendication 1 ou 2, dans lequel lesdits modules sont configurés de telle sorte que chacun desdits modules entre en communication sans fil à courte distance avec au moins un autre desdits modules et transmet des données sur une intensité de signal d'une transmission de signal entre ledit dispositif d'accès et ledit module respectif audit autre module.

4. Dispositif selon la revendication 3, dans lequel le module couplé au dispositif de commande est conçu comme un module principal de telle sorte qu'il est conçu pour une communication à courte distance avec tous les autres modules, dans lequel le module principal reçoit des informations des autres modules sur les intensités de signal respectivement détectées à cet endroit et transmet ces informations ou des informations dérivées de celles-ci au dispositif de commande.

5. Dispositif de la revendication 4, dans lequel le module principal est couplé au dispositif de commande via une ligne de données.

6. Dispositif selon l'une quelconque des revendications précédentes, dans lequel les moyens de fixation sont réalisés sous forme de plots adhésifs.

7. Dispositif selon l'une quelconque des revendications précédentes, dans lequel le dispositif d'accès se présente sous la forme d'un smartphone.
